# EUROPEAN PATENT SPECIFICATION

(11) **EP 3 187 833 B1**
(45) Date of publication and mention of the grant of the patent: **25.03.2020**
(21) Application number: 15834980.3
(22) Date of filing: 19.08.2015
(51) Int. Cl.: G01D 5/353, G01D 3/036, G05D 23/19

(54) **OPTICAL FIBER GRATING DEMODULATOR AND TEMPERATURE CONTROL METHOD THEREOF**
OPTISCHER FASERGITTERDEMODULATOR UND TEMPERATURSTEUERUNGSVERFAHREN DAFÜR
DÉMODULATEUR DE RÉSEAU À FIBRE OPTIQUE ET SON PROCÉDÉ DE RÉGULATION THERMIQUE

(30) Priority: 25.08.2014 CN 201410420013
(43) Date of publication of application: 05.07.2017
(73) Proprietor: Nuctech Company Limited, TongFang Building, Shuangqinglu, Haidian District Beijing 100084 (CN)
(72) Inventor: YAO, Kai, Beijing 100084 (CN); MAO, Xianhui, Beijing 100084 (CN); ZHAO, Zonglei, Beijing 100084 (CN); JIANG, Ting, Beijing 100084 (CN); XIAO, Hang, Beijing 100084 (CN)
(74) Representative: Boult Wade Tennant LLP
(86) International application number: PCT/CN2015/087489
(87) International publication number: WO 2016/029812

(56) References cited:
- WO-A1-2004/030168
- CN-A- 101 621 178
- CN-A- 102 607 613
- CN-A- 103 575 331
- CN-A- 103 717 033
- CN-U- 202 795 081
- CN-U- 204 177 401
- CN-Y- 201 130 028
- US-A1- 2003 063 886
- US-A1- 2003 063 887

## Description

### TECHNICAL FIELD

Embodiments of the present application relate to optical fiber grating demodulator (OFGD), and in particular to OFGD operable within a certain temperature range and temperature control method thereof.

### BACKGROUND

Optical fiber grating sensor is among various optical fiber sensors and widely used for monitoring of structural health, temperature, and rockfall on railways. With an optical fiber grating sensor, a change of the center wavelength of a reflected light reflects a magnitude of the physical quantity as measured, and an OFGD may convert an optical signal from an optical fiber grating sensor to an electric signal capable of being recognized by a computer system.

OFGD are mainly classified into a diffraction grating type, as described in CN201425690, and a scanning filtered type, as described in CN203083585U. In an OFGD, either of the diffraction grating type or of the scanning filtered type, photoelectronic elements and pure optical elements have to be used. Owing to limitations from available processes and operation principles, photoelectronic elements and pure optical elements both have a relatively narrow range of working temperature. As an example of pure optical element, commercially available fiber circulators typically have a range of working temperature of -5°C ∼ 70°C, and very few may achieve a range of -20°C ∼ 70°C. Outside the range, normal operation will be impossible due to significant increase in some key technical indicators, e.g. insertion loss, crosstalk, or the like. Active devices, e.g. optical source, optical switch, etc., will typically have an even narrower range of working temperature. Therefore, neither type of OFGD is operable under a condition of extreme environment temperature.

CN103575331 discloses a device for simultaneously testing temperature and strain of a high-temperature structure. US2003063886 discloses an optical package controlling method in a fiber optic network, involving heating and cooling optical components in response to sensed temperature. CN201130028Y discloses an optical fiber optical grating sensor demodulator with a temperature controller.

### SUMMARY

In order to overcome the deficiency that conventional OFGDs cannot be used in a wide range of temperature, embodiments of the application provides OFGDs and temperature control methods thereof expanding the range of working temperature of OFGD to -40°C ∼ 70°C.

The invention resides, in a first aspect, in an optical fiber grating demodulator in accordance with claim 1. The invention also extends to a temperature control method for such an optical fiber grating demodulator, as defined in claim 13.

Embodiments of the application may greatly expand the range of working temperature for OFGDs. By selecting a heating and cooling element having a relatively high efficiency, the working temperature of the instrument may even be expanded to -40°C ∼ 70°C. Through a relatively accurate temperature control, embodiments of the application may improve performance of photoelectric elements and demodulation accuracy of OFGDs, prolong lifecycle of the instrument and increase its reliability.

### BRIEF DESCRIPTION OF THE DRAWINGS

Example embodiments of the invention will be described in the following in conjunction with the accompanying drawings.
Fig. 1 is a structural diagram of an OFGD according to an example embodiment of the application.
Fig. 2 is a structural diagram of an OFGD according to an example embodiment of the application.
Fig. 3 is a flow chart of a temperature control method for OFGD according to an example embodiment of the application.

### DETAILED DESCRIPTION

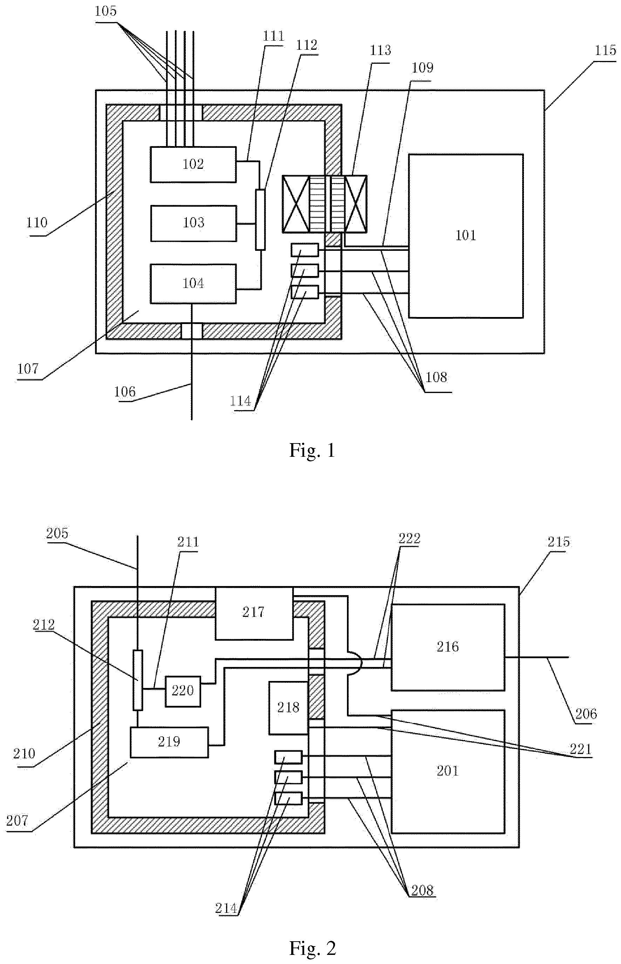

Fig. 1 is a structural diagram of an OFGD according to an example embodiment of the application. The OFGD may, for example, be applied to an OFGD of the diffraction grating type.

In Fig. 1, a temperature control circuit is denoted with 101, an optical switch is denoted with 102, an optical source is denoted with 103, a photoelectric conversion module is denoted with 104, an optical fiber coupled to the optical switch 102 is denoted with 105, a data line coupled to a host machine is denoted with 106, a working chamber is denoted with 107; power and data lines for temperature sensor are denoted with 108, control and power lines for cooler and heater element are denoted with 109, a heat insulation layer is denoted with 110, an optical fiber is denoted with 111, a circulator is denoted with 112, the cooler and heater element is denoted with 113, the temperature sensor is denoted with 114, and an OFGD chassis is denoted with 115.

In an embodiment, the OFGD includes the working chamber 107 and a temperature control system. The working chamber 107 and the temperature control system may be provided within the OFGD chassis 115. The OFGD may further include an optical device housed in the working chamber 107, for example the optical source 103, the optical switch 102, the photoelectric conversion module 104 and the circulator 112. The optical switch 102 is coupled to an end of the optical fiber 105, and the other end of the optical fiber 105 is coupled to an optical fiber grating sensor (not shown). The fiber 111 couples the optical switch 102 with the circulator 112. The optical source 103 and the photoelectric conversion module 104 are coupled to the circulator 112 respectively.

The working chamber 107 may be made of a heat conductive material, e.g. a material having relatively good heat conductivity, for example metal or the like. A heat insulation layer 110 may tightly enclose the outside of the working chamber 107 to minimize heat exchange between inside and external of the working chamber 107. The optical fiber 105 coupled to the optical switch 102 and the data line 106 coupled to the host machine are introduced into the OFGD and introduced outward to the host machine via holes on sidewall(s) of the working chamber 107. The holes may be as small as possible to reduce the heat exchange between inside and external of the working chamber 107.

During operation, the OFGD receives an optical signal from the optical fiber grating sensor through the optical fiber 105, and the received optical signal is diffracted through the optical source 103, the optical switch 102, the optical fiber 111, the circulator 112 and the photoelectric conversion module 104 for spatial separation of the wavelengths in the received optical signal, whereby a photoelectric signal conversion is achieved. The converted electric signal is then transmitted to the host machine (e.g. a computer) through the data line 106 coupled to the host machine for further analysis and process.

The temperature control system of the OFGD is used to adjust the temperature within the working chamber 107 so that the optical device within the working chamber operates within a suitable range of temperature. According to an example embodiment, the range of temperature may be 30°C ∼ 45°C. As the temperature within the working chamber can be adjusted to a suitable temperature, the optical device within the working chamber can operate stably. This allows the OFGD to work in a wide range of working conditions. For example, even if the OFGD chassis 115 is at a temperature in a range of -40°C ∼ 70°C, the OFGD can still operate normally.

The temperature control system may include the temperature control circuit 101, the cooler and heater element 113 and the temperature sensor 114. In an embodiment, the cooler and heater element 113 may include a semiconductor cooler 113. The semiconductor cooler 113 may be provided with heat dissipation fins and fans, for example heat dissipation fins on a cooling and heating surface and a heat dissipation fan. The semiconductor cooler 113 may have an operation surface adjacent to an outer surface of the working chamber 107. The semiconductor cooler 113 may be coupled to the temperature control circuit 101 via the control and power lines 109. The temperature sensor 114 may be coupled to the temperature control circuit 101 via the temperature sensor power and data lines 108. The temperature sensor power and data lines 108 may be coupled to the temperature control circuit 101 through a hole on a sidewall of the working chamber 107. The hole may be as small as possible to reduce the heat exchange between inside and external of the working chamber 107. The temperature sensor 114 may include a set of temperature sensors consisting of a plurality of temperature sensors. The set of temperature sensors may be provided at various positions in the working chamber 107, e.g. where optical elements are arranged relatively dense in the working chamber 107. The temperature sensor 114 may obtain the temperature within the working chamber 107 in real time or periodically, which may be sent to the temperature control circuit 101 through the temperature sensor power and data lines 108 as the basis for the temperature control circuit 101 to control the temperature within the working chamber 107.

The semiconductor cooler 113 includes at least a pair of N-type semiconductor material and P-type semiconductor material, which are connected to form a couple. Though commonly known as "cooler" in the art, a semiconductor cooler is capable of not only cooling, but also heating. For example, when the semiconductor cooler 113 is powered with a direct current (DC), it will absorb heat to achieve a temperature reducing effect if the current flows from the N-type material to the P-type material (also known as a "forward current"), while it will release heat to achieve a temperature rising effect if the current flows from the P-type material to the N-type material (also known as an "reverse current").

The temperature control circuit 101 receives a temperature signal from the temperature sensor 114. For example, when the temperature sensor 114 has provided a signal indicating a low temperature lower than or near 30°C, the temperature control circuit 101 may signal the semiconductor cooler 113 to increase an output (e.g. output power or duration) of the semiconductor cooler 113 to increase the temperature within the working chamber 107 accordingly. In this way, the temperature within the working chamber 107 is maintained in a suitable range of temperature not lower than 30°C so that the optical elements in the working chamber 107 operate stably. In order to increase the temperature within the working chamber 107, the temperature control circuit 101 may apply a reverse current to the semiconductor cooler 113 and may increase the magnitude of the applied current.

In contrast, when the temperature sensor 114 has provided a signal indicating a high temperature higher than or near 45°C for example, the temperature control circuit 101 may signal the semiconductor cooler 113 to increase an output of the semiconductor cooler 113 to decrease the temperature within the working chamber 107 accordingly. In this way, the temperature within the working chamber 107 is maintained in a suitable range of temperature not higher than 45°C so that the optical elements in the working chamber 107 operate stably. In order to decrease the temperature within the working chamber 107, the temperature control circuit 101 may apply a forward current to the semiconductor cooler 113 and may increase the magnitude of the applied current.

The temperature control circuit 101 may operate in the above manner till the temperature from the set of temperature sensors 114 is with a suitable range, e.g. 30°C∼45°C or a range of temperature in which the optical elements in the working chamber 107 will operate stably.

In an embodiment, a fixed threshold T may be set in accordance with the actual situation of temperature outside. For example, if it is relatively cold outside the OFGD chassis 115, the threshold T may be set to the side of 45°C, for example 44°C. On the other hand, if it is relatively hot outside the OFGD chassis 115, the threshold T may be set to the side of 30°C, for example 31°C. The threshold may be set to another temperature value by considering the actual operations.

With the temperature threshold T set, if the temperature sensor 114 has provided a signal indicating a high temperature higher than the threshold T, the temperature control circuit 101 may signal the semiconductor cooler 113 to increase an output of the semiconductor cooler 113 to decrease the temperature within the working chamber 107 accordingly. In this way, the temperature within the working chamber 107 is maintained not higher than the threshold T so that the optical elements in the working chamber 107 operate stably. In order to maintain the temperature within the working chamber 107 not higher than the threshold T, the temperature control circuit 101 may apply a forward current to the semiconductor cooler 113 and may increase the magnitude of the applied current.

When the temperature sensor 114 has provided a signal indicating a low temperature lower than the threshold T, the temperature control circuit 101 may signal the semiconductor cooler 113 to increase an output of the semiconductor cooler 113 to increase the temperature within the working chamber 107 accordingly. In this way, the temperature within the working chamber 107 is maintained not lower than the threshold T so that the optical elements in the working chamber 107 operate stably. In order to maintain the temperature within the working chamber 107 not lower than the threshold T, the temperature control circuit 101 may apply a reverse current to the semiconductor cooler 113 and may increase the magnitude of the applied current.

If the semiconductor cooler 113 includes a plurality of pairs of N-type semiconductor material and P-type semiconductor material, the magnitude of the current the temperature control circuit 101 applies to the semiconductor cooler 113 may be increased as the number of pairs increases, so that the temperature can be increased or decreased at a higher speed.

Fig. 2 is a structural diagram of an OFGD according to an example embodiment of the application. The OFGD may, for example, be applied to an OFGD of the scanning filtered type.

In Fig. 2, a temperature control circuit is denoted with 201, an optical fiber coupled to a circulator is denoted with 205, a data line coupled to a host machine is denoted with 206, a working chamber is denoted with 207; temperature sensor power and data lines are denoted with 208, a heat insulation layer is denoted with 210, an optical fiber is denoted with 211, the circulator is denoted with 212, the temperature sensor is denoted with 214, an OFGD chassis is denoted with 215, a scanning optical source control circuit and photodetection circuit is denoted with 216, a cooler is denoted with 217, a heater is denoted with 218, a scanning optical source is denoted with 219, a photodetector is denoted with 220, control and power lines for cooler and heater element are denoted with 221, and signal line and power line for the scanning optical source and the photodetector are denoted with 222.

In an embodiment, the OFGD includes the working chamber 207 and a temperature control system. The working chamber 207 and the temperature control system may be provided within the OFGD chassis 215. The OFGD may further include an optical device housed in the working chamber 107, for example the scanning optical source 219, the circulator 212, the photodetector 220, and the scanning optical source control circuit and photodetection circuit 216.

The working chamber 207 may be made of a heat conductive material, e.g. a material having relatively good heat conductivity, for example metal or the like. A heat insulation layer 210 may tightly enclose the outside of the working chamber 207 to minimize heat exchange between inside and external of the working chamber 207.

The optical fiber 205 coupled to the circulator 212 and the signal line and power line for the scanning optical source 219 and the photodetector 220 are introduced into the working chamber 207 and introduced outward to the scanning optical source control circuit and photodetection circuit 216 via holes on sidewall(s) of the working chamber 207. The holes may be as small as possible to reduce the heat exchange between inside and external of the working chamber 207.

During operation, the OFGD receives an optical signal from the optical fiber grating sensor (not shown) through the optical fiber 205, and the received optical signal is filtered and converted to an electric signal through the laser scanning optical source 219 and the photodetector 220 to send to the scanning optical source control circuit and photodetection circuit 216 for further process. The scanning optical source control circuit and photodetection circuit 216 may control the frequency and power of the laser emitted from the laser scanning optical source 219, and transmit the processed electric signal to a host machine, e.g. a computer through the data line 206 coupled to the host machine for further analysis and process.

In an embodiment, the scanning optical source control circuit and photodetection circuit 216 may be provided within the working chamber 207 to reduce the holes needed on the sidewalls of the working chamber 207.

The temperature control system of the OFGD is used to adjust the temperature within the working chamber 207 so that the optical device within the working chamber operates within a suitable range of temperature. According to an example embodiment, the range of temperature may be 30°C ∼ 45°C. The temperature control system may include the temperature control circuit 201, the cooler 217 (e.g. small cooling compressor) and the heater 218 (e.g. positive temperature coefficient (PTC) thermal resistor heater). The cooler 217 and the heater 218 as actuators of the temperature control system are coupled to the temperature control circuit 201 respectively via the control and power lines for cooler and heater element 221. The temperature control circuit 201 may obtain the temperature within the working chamber via the temperature sensor 214, and control the temperature within the working chamber on this basis through some control policy.

The temperature sensor 214 may be coupled to the temperature control circuit 201 via the temperature sensor power and data lines 208. The temperature sensor power and data lines 208 may be coupled to the temperature control circuit 201 through a hole on a sidewall of the working chamber 207. The hole may be as small as possible to reduce the heat exchange between inside and external of the working chamber 207. The temperature sensor 214 may include a set of temperature sensors consisting of a plurality of temperature sensors. The set of temperature sensors may be provided at various positions in the working chamber 107, e.g. where optical elements are arranged relatively dense in the working chamber 207. The temperature sensor 214 may obtain the temperature within the working chamber in real time or periodically, which may be sent to the temperature control circuit 201 through the temperature sensor power and data lines 208 as the basis for the temperature control circuit 201 to control the temperature within the working chamber 207.

The cooler 217 may be embedded in the working chamber 207 and the heat insulation layer 210 enclosing the working chamber 207. The cooler 217 may accept an instruction from the temperature control circuit 201 to decrease the temperature within the working chamber 207. The cooler 217 may be powered by the temperature control circuit 201.

The heater 218 may be provided within the working chamber 207; for example, its heating member may be provided entirely within the working chamber 207. The heater 218 may accept an instruction from the temperature control circuit 201 to increase the temperature within the working chamber 207. The heater 218 may be powered by the temperature control circuit 201.

The temperature control circuit 201 receives a temperature signal from the set of temperature sensors 214. For example, when the temperature sensor 214 has indicated a low temperature lower than or near 30°C, the temperature control circuit 201 may signal the heater 218 to increase an output of the heater 218 to increase the temperature within the working chamber 207 accordingly. In this way, the temperature within the working chamber 207 is maintained in a suitable range of temperature not lower than 30°C so that the optical elements in the working chamber 207 operate stably.

In contrast, when the temperature sensor 214 has provided a signal indicating a high temperature higher than or near 45°C for example, the temperature control circuit 201 may signal the cooler 217 to increase an output of the cooler 217 to decrease the temperature within the working chamber 207 accordingly. In this way, the temperature within the working chamber 207 is maintained in a suitable range of temperature not higher than 45°C so that the optical elements in the working chamber 207 operate stably.

The temperature control circuit 201 may continuously operate in the above manner till the temperature from the set of temperature sensors 214 is with a suitable range, e.g. 30°C∼45°C or a range of temperature in which the optical elements in the working chamber 207 will operate stably.

In an embodiment, a fixed threshold T may be set in accordance with the actual situation of temperature outside. For example, if it is relatively cold outside the OFGD chassis 215, the threshold T may be set to the side of 45°C, for example 44°C. On the other hand, if it is relatively hot outside the OFGD chassis 215, the threshold T may be set to the side of 30°C, for example 31°C. The threshold may be set to another temperature value by considering the actual operations.

With the temperature threshold T set, if the temperature sensor 214 has provided a signal indicating a high temperature higher than the threshold T, the temperature control circuit 201 may signal the cooler 217 to increase an output of the cooler 217 to decrease the temperature within the working chamber 207 accordingly. In this way, the temperature within the working chamber 207 is maintained not higher than the threshold T so that the optical elements in the working chamber 207 operate stably.

When the temperature sensor 214 has provided a signal indicating a low temperature lower than the threshold T, the temperature control circuit 201 may signal the heater 218 to increase an output of the heater 218 to increase the temperature within the working chamber 207 accordingly. In this way, the temperature within the working chamber 207 is maintained not lower than the threshold T so that the optical elements in the working chamber 207 operate stably.

The temperature control system shown in Fig. 1 may be applied to the OFGD shown in Fig. 2; alternatively, the temperature control system shown in Fig. 2 may be applied to the OFGD shown in Fig. 1. This replacement will be apparent for those skilled in the art.

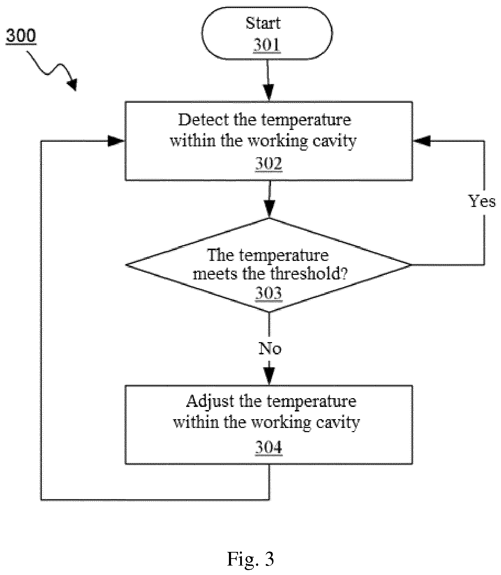

Fig. 3 is a flow chart of a temperature control method for OFGD according to an example embodiment of the application. The OFGD may include a temperature control system and a working chamber that houses an optical device of the OFGD. In an embodiment, a heat insulation layer tightly encloses the outside of the working chamber to minimize heat exchange between inside and external of the working chamber. The method may be implemented in a temperature control circuit of the temperature control system in software, hardware or their combination.

The method 300 starts at step 301 where the temperature control system is powered on. At this time the OFGD may be or may not be in an operating state. The method then proceeds to step 302 where the temperature control circuit of the temperature control system detects a temperature within the working chamber of the OFGD. For example the temperature may be detected by reading information sensed by a temperature sensor provided in the working chamber. The method then proceeds to step 303 where it is determined if the detected temperature within the working chamber meets a temperature threshold T. If the threshold T is met, the method 300 returns to step 302 to continue detection on the temperature within the working chamber. If the threshold T is not met, the method 300 proceeds to step 304 to adjust the temperature within the working chamber.

In an embodiment, the optical device in the working chamber of the OFGD performs well in 30°C ∼ 45°C, a temperature range near a room temperature. The threshold T may then be selected as any value in the temperature range 30°C ∼ 45°C. In addition, it is possible to set a threshold T based on the actual external temperature. For example, if it is relatively cold outside the OFGD, the threshold T may be set to the side of 45°C, e.g. 44°C; on the other hand, if it is relatively hot outside, the threshold T may be set to the side of 30°C, e.g. 31°C. The threshold may be set to another temperature value by considering the actual operations.

In step 304 of the method 300, if the detected temperature within the working chamber is lower than the set threshold, the output of the temperature control circuit may be adjusted to increase the temperature in the working chamber; if the detected temperature within the working chamber is higher than the set threshold, the output of the temperature control circuit may be adjusted to decrease the temperature in the working chamber.

In an embodiment, the temperature control system includes a cooler and heater element which may be a semiconductor cooler. When the temperature sensor has provided a signal indicating a high temperature higher than the set threshold T, the temperature control circuit may signal the semiconductor cooler to increase an output of the semiconductor cooler to decrease the temperature within the working chamber accordingly. In this way, the temperature within the working chamber is maintained not higher than the set threshold T so that the optical elements in the working chamber operate stably. In order to have the highest temperature within the working chamber not higher than the set threshold T, the temperature control circuit may apply a forward current to the semiconductor cooler and may increase the magnitude of the applied current.

When the temperature sensor has provided a signal indicating a low temperature lower than the set threshold T, the temperature control circuit may signal the semiconductor cooler to increase an output of the semiconductor cooler to increase the temperature within the working chamber accordingly. In this way, the temperature within the working chamber is maintained not lower than the set threshold T so that the optical elements in the working chamber operate stably. In order to have the lowest temperature within the working chamber not higher than the set threshold T, the temperature control circuit may apply a reverse current to the semiconductor cooler and may increase the magnitude of the applied current.

In an embodiment, the temperature control system may include a cooler and a heater. When the temperature sensor has provided a signal indicating a high temperature higher than the set threshold T, the temperature control circuit may signal the cooler to increase an output of the cooler to decrease the temperature within the working chamber accordingly. In this way, the temperature within the working chamber is maintained not higher than the set threshold T so that the optical elements in the working chamber operate stably.

When the temperature sensor has provided a signal indicating a low temperature lower than the set threshold T, the temperature control circuit may signal the heater to increase an output of the heater to increase the temperature within the working chamber accordingly. In this way, the temperature within the working chamber is maintained not lower than the set threshold T so that the optical elements in the working chamber operate stably.

After adjusting the output of the temperature control circuit, it is possible to return to step 302 to re-detect immediately the temperature within the working chamber. Alternatively a time delay, e.g. 1-5 minutes, may be provided after which the temperature within the working chamber is re-detected.

The method 300 then has the above steps repeated so that the temperature in the working chamber is equal to or near the set threshold.

In an embodiment, the temperature threshold in step 303 may be a temperature range having an upper limit temperature and a lower limit temperature. For example the range of temperature may be 30°C ∼ 45°C and thus the upper limit temperature is 45°C while the lower limit temperature is 30°C. If the detected temperature is within the set range of temperature, the method 300 returns to step 302 to go on with detecting the temperature within the working chamber. Otherwise the method 300 proceeds to step 304 to adjust the output of the temperature control circuit to increase or decrease the temperature within the working chamber so that the temperature within the working chamber falls in the set range of temperature. The adjustment of output power of the temperature control circuit may be carried out in this manner so that the temperature in the working chamber is in the set range of temperature.

The set range of temperature is not necessarily 30°C ∼ 45°C. It may be for example 31°C ∼ 44°C, or narrower, or wider. Setting of this range of temperature may be adjusted by further considering the operation parameters of the optical device in the working chamber.

Example embodiments of the application have been described above in conjunction with the drawings. However the scope of the invention is not limited thereto, and a person skilled in the art may conceive of various modifications and alternatives within the disclosure of the application.

## Claims

1. An optical fiber grating demodulator, comprising:
a working chamber (107, 207) for housing an optical device (102, 103, 104, 112; 212, 219, 220), comprising a hole on a sidewall, through which the optical device (102, 103, 104, 112; 212, 219, 220) is connectable by an optical fiber (105, 205) to an optical fiber grating sensor external to the optical fiber grating demodulator;
a heat insulation layer (110, 210) enclosing the working chamber (107, 207) for insulating the optical device (102, 103, 104, 112; 212, 219, 220) from an external of the working chamber (107, 207) with respect to heat exchange; and
a temperature control system (101, 113, 114; 201, 214, 217, 218) coupled to the working chamber (107, 207) to adjust a temperature within the working chamber (107, 207) such that the temperature within the working chamber (107, 207) meets a temperature threshold (T).

2. The optical fiber grating demodulator of claim 1, wherein the temperature control system (101, 113, 114; 201, 214, 217, 218) comprises a temperature control circuit (101, 201), a temperature sensor (114, 214) coupled to the temperature control circuit (101, 201), and a temperature adjustment device (113; 217, 218) coupled to the temperature control circuit (101, 201).

3. The optical fiber grating demodulator of claim 2, wherein the temperature sensor (114, 214) is mounted inside the working chamber (107, 207).

4. The optical fiber grating demodulator of claim 3, wherein the temperature sensor (114, 214) comprises a set of temperature sensors.

5. The optical fiber grating demodulator of claim 2, wherein the temperature adjustment device (113; 217, 218) comprises a cooler and heater element (113; 217, 218).

6. The optical fiber grating demodulator of claim 5, wherein the cooler and heater element (113) comprises a semiconductor cooler (113) capable of cooling and heating.

7. The optical fiber grating demodulator of claim 6, wherein the semiconductor cooler (113) is mounted to have an operation surface adjacent to an outer surface of the working chamber (107, 207).

8. The optical fiber grating demodulator of claim 5, wherein the cooler and heater element (217, 218) comprises a heater (218) provided entirely within the working chamber (207) and a cooler (217) embedded in the working chamber (207) and the heat insulation layer (210) enclosing the working chamber (207).

9. The optical fiber grating demodulator of any of claims 1-8, further comprising the optical device (102, 103, 104, 112), wherein the optical device (102, 103, 104, 112) comprises an optical switch (102), an optical source (103), a photo-electric conversion module (104) and a circulator (112).

10. The optical fiber grating demodulator of any of claims 1-8, further comprising the optical device (212, 219, 220), wherein the optical device (212, 219, 220) comprises a scanning optical source (219), a circulator (212) and a photodetector (220).

11. The optical fiber grating demodulator of claim 10, further comprising a scanning optical source control circuit and a photodetection circuit (216), the scanning optical source control circuit and the photodetection circuit (216) are provided outside the working chamber (207) and coupled to the scanning optical source (219) and the photodetector (220).

12. The optical fiber grating demodulator of any of claims 1-8, wherein the temperature control system (101, 113, 114; 201, 214, 217, 218) is configured to adjust the temperature within the working chamber (107, 207) to 30°C ∼ 45°C.

13. A temperature control method using the optical fiber grating demodulator of any of claims 1-12, comprising:
detecting (302) the temperature within the working chamber (107, 207);
determining (303) by the temperature control system (101, 113, 114; 201, 214, 217, 218) whether the detected temperature within the working chamber (107, 207) meets a set temperature threshold (T); and
adjusting (304), if the temperature threshold (T) is not met, an output of a temperature control circuit (101, 201) of the temperature control system (101, 113, 114; 201, 214, 217, 218) such that the temperature within the working chamber (107, 207) meets the temperature threshold (T).

## Patentansprüche

1. Optischer Fasergitterdemodulator, umfassend:
eine Arbeitskammer (107, 207) zum Aufnehmen einer optischen Vorrichtung (102, 103, 104, 112; 212, 219, 220), die ein Loch in einer Seitenwand aufweist, durch das die optische Vorrichtung (102, 103, 104, 112; 212, 219, 220) durch eine optische Faser (105, 205) mit einem optischen Fasergittersensor außerhalb des optischen Fasergitterdemodulators verbindbar ist;
eine Wärmeisolationsschicht (110, 210), die die Arbeitskammer (107, 207) umschließt, um die optische Vorrichtung (102, 103, 104, 112; 212, 219, 220) von der Außenseite der Arbeitskammer (107, 207) in Bezug auf den Wärmeaustausch zu isolieren; und
ein Temperatursteuersystem (101, 113, 114; 201, 214, 217, 218), das mit der Arbeitskammer (107, 207) gekoppelt ist, um eine Temperatur innerhalb der Arbeitskammer (107, 207) derart einzustellen, dass die Temperatur innerhalb der Arbeitskammer (107, 207) eine Temperaturschwelle (T) erfüllt.

2. Optischer Fasergitterdemodulator nach Anspruch 1, wobei das Temperatursteuersystem (101, 113, 114; 201, 214, 217, 218) eine Temperatursteuerschaltung (101, 201), einen mit der Temperatursteuerschaltung (101, 201) gekoppelten Temperatursensor (114, 214) und eine mit der Temperatursteuerschaltung (101, 201) gekoppelte Temperatureinstellvorrichtung (113; 217, 218) aufweist.

3. Optischer Fasergitterdemodulator nach Anspruch 2, wobei der Temperatursensor (114, 214) innerhalb der Arbeitskammer (107, 207) angebracht ist.

4. Optischer Fasergitterdemodulator nach Anspruch 3, wobei der Temperatursensor (114, 214) eine Gruppe von Temperatursensoren aufweist.

5. Optischer Fasergitterdemodulator nach Anspruch 2, wobei die Temperatureinstellvorrichtung (113; 217, 218) ein Kühl- und Heizelement (113; 217, 218) aufweist.

6. Optischer Fasergitterdemodulator nach Anspruch 5, wobei das Kühl- und Heizelement (113) einen Halbleiterkühler (113) aufweist, der zum Kühlen und Heizen fähig ist.

7. Optischer Fasergitterdemodulator nach Anspruch 6, wobei der Halbleiterkühler (113) so angebracht ist, dass er eine Betriebsfläche aufweist, die an eine Außenfläche der Arbeitskammer (107, 207) angrenzt.

8. Optischer Fasergitterdemodulator nach Anspruch 5, wobei das Kühl- und Heizelement (217, 218) eine vollständig in der Arbeitskammer (207) vorgesehene Heizung (218), und einen in die Arbeitskammer (207) und die die Arbeitskammer (207) einschließende Wärmedämmschicht (210) eingebetteten Kühler (217) aufweist.

9. Optischer Fasergitterdemodulator nach einem der Ansprüche 1 bis 8, ferner umfassend: die optische Vorrichtung (102, 103, 104, 112), wobei die optische Vorrichtung (102, 103, 104, 112) einen optischen Schalter (102), eine optische Quelle (103), ein fotoelektrisches Umwandlungsmodul (104) und einen Zirkulator (112) aufweist.

10. Optischer Fasergitterdemodulator nach einem der Ansprüche 1 bis 8, ferner umfassend die optische Vorrichtung (212, 219, 220), wobei die optische Vorrichtung (212, 219, 220) eine Abtastlichtquelle (219) und einen Zirkulator (212) und einen Fotodetektor (220) aufweist.

11. Optischer Fasergitterdemodulator nach Anspruch 10, ferner umfassend: eine Steuerschaltung für die Abtastlichtquelle und eine Fotodetektionsschaltung (216), die Steuerschaltung für die Abtastlichtquelle und die Fotodetektionsschaltung (216) außerhalb der Arbeitskammer (207) vorgesehen sind und mit der Abtastlichtquelle (219) und dem Fotodetektor (220) gekoppelt ist.

12. Optischer Fasergitterdemodulator nach einem der Ansprüche 1 bis 8, wobei das Temperatursteuersystem (101, 113, 114; 201, 214, 217, 218) dazu konfiguriert ist, die Temperatur innerhalb der Arbeitskammer (107, 207) bis 30 ° C ∼ 45 ° C einzustellen.

13. Temperatursteuerverfahren unter Verwendung des optischen Fasergitterdemodulators nach einem der Ansprüche 1 bis 12, umfassend:
Erfassen (302) der Temperatur in der Arbeitskammer (107, 207);
Bestimmen (303) durch das Temperatursteuersystem (101, 113, 114; 201, 214, 217, 218), ob die erfasste Temperatur in der Arbeitskammer (107, 207) eine eingestellte Temperaturschwelle (T) erfüllt; und
Einstellen (304), wenn die Temperaturschwelle (T) nicht erfüllt ist, einer Ausgabe einer Temperatursteuerschaltung (101, 201) des Temperatursteuersystems (101, 113, 114; 201, 214, 217, 218), so dass die Temperatur in der Arbeitskammer (107, 207) der Temperaturschwelle (T) erfüllt.

## Revendications

1. Démodulateur de réseau à fibre optique, comprenant :
une chambre de travail (107, 207) pour loger un dispositif optique (102, 103, 104, 112 ; 212, 219, 220), comprenant un trou sur une paroi latérale, à travers lequel le dispositif optique (102, 103, 104, 112 ; 212, 219, 220) peut être relié par une fibre optique (105, 205) à un capteur de réseau à fibre optique à l'extérieur du démodulateur de réseau à fibre optique ;
une couche d'isolation thermique (110, 210) entourant la chambre de travail (107, 207) pour isoler le dispositif optique (102, 103, 104, 112 ; 212, 219, 220) par rapport à un extérieur de la chambre de travail (107, 207) en termes d'échange thermique ; et
un système de commande de température (101, 113, 114 ; 201, 214, 217, 218) couplé à la chambre de travail (107, 207) pour régler une température à l'intérieur de la chambre de travail (107, 207) de sorte que la température à l'intérieur de la chambre de travail (107, 207) atteigne un seuil de température (T).

2. Démodulateur de réseau à fibre optique de la revendication 1, dans lequel le système de commande de température (101, 113, 114 ; 201, 214, 217, 218) comprend un circuit de commande de température (101, 201), un capteur de température (114, 214) couplé au circuit de commande de température (101, 201), et un dispositif de réglage de température (113 ; 217, 218) couplé au circuit de commande de température (101, 201).

3. Démodulateur de réseau à fibre optique de la revendication 2, dans lequel le capteur de température (114, 214) est monté à l'intérieur de la chambre de travail (107, 207).

4. Démodulateur de réseau à fibre optique de la revendication 3, dans lequel le capteur de température (114, 214) comprend un ensemble de capteurs de température.

5. Démodulateur de réseau à fibre optique de la revendication 2, dans lequel le dispositif de réglage de température (113 ; 217, 218) comprend un élément de refroidissement et de chauffage (113 ; 217, 218).

6. Démodulateur de réseau à fibre optique de la revendication 5, dans lequel l'élément de refroidissement et de chauffage (113) comprend un refroidisseur à semiconducteur (113) capable d'effectuer un refroidissement et un chauffage.

7. Démodulateur de réseau à fibre optique de la revendication 6, dans lequel le refroidisseur à semiconducteur (113) est monté pour avoir une surface de fonctionnement adjacente à une surface externe de la chambre de travail (107, 207).

8. Démodulateur de réseau à fibre optique de la revendication 5, dans lequel l'élément de refroidissement et de chauffage (217, 218) comprend un dispositif de chauffage (218) fourni entièrement à l'intérieur de la chambre de travail (207) et un dispositif de refroidissement (217) incorporé dans la chambre de travail (207) et la couche d'isolation thermique (210) entourant la chambre de travail (207).

9. Démodulateur de réseau à fibre optique de l'une des revendications 1 à 8, comprenant en outre le dispositif optique (102, 103, 104, 112), le dispositif optique (102, 103, 104, 112) comprenant un commutateur optique (102), une source optique (103), un module de conversion photo-électrique (104) et un circulateur (112).

10. Démodulateur de réseau à fibre optique de l'une des revendications 1 à 8, comprenant en outre le dispositif optique (212, 219, 220), le dispositif optique (212, 219, 220) comprenant une source optique de balayage (219), un circulateur (212) et un photodétecteur (220).

11. Démodulateur de réseau à fibre optique de la revendication 10, comprenant en outre un circuit de commande de source optique de balayage et un circuit de photodétection (216), le circuit de commande de source optique de balayage et le circuit de photodétection (216) sont prévus à l'extérieur de la chambre de travail (207) et couplés à la source optique de balayage (219) et au photodétecteur (220).

12. Démodulateur de réseau à fibre optique de l'une des revendications 1 à 8, dans lequel le système de commande de température (101, 113, 114 ; 201, 214, 217, 218) est configuré pour régler la température à l'intérieur de la chambre de travail (107, 207) entre 30°C et 45°C.

13. Procédé de commande de température utilisant le démodulateur de réseau à fibre optique de l'une des revendications 1 à 12, comprenant les étapes consistant à :
détecter (302) la température à l'intérieur de la chambre de travail (107, 207) ;
déterminer (303) par le système de commande de température (101, 113, 114 ; 201, 214, 217, 218) si la température détectée à l'intérieur de la chambre de travail (107, 207) atteint un seuil de température défini (T) ; et
régler (304), si le seuil de température (T) n'est pas atteint, une sortie d'un circuit de commande de température (101, 201) du système de commande de température (101, 113, 114 ; 201, 214, 217, 218) de sorte que la température à l'intérieur de la chambre de travail (107, 207) atteigne le seuil de température (T).
